# FASCICULE DE BREVET EUROPEEN

(11) **EP 2 649 146 B1**
(45) Date de publication et mention de la délivrance du brevet: **14.08.2019**
(21) Numéro de dépôt: 11811046.9
(22) Date de dépôt: 08.12.2011
(51) Int. Cl.: C09K 8/588, C09K 8/58, C08L 33/00

(54) **PROCEDE AMELIORE DE RECUPERATION ASSISTEE DU PETROLE**
VERBESSERTES VERFAHREN ZUR UNTERSTÜTZTEN GEWINNUNG VON ERDÖL
IMPROVED METHOD FOR THE ASSISTED RECOVERY OF PETROLEUM

(30) Priorité: 09.12.2010 FR 1060317
(43) Date de publication de la demande: 16.10.2013
(73) Titulaire: S.P.C.M. SA, 42160 Andrézieux Bouthéon (FR)
(72) Inventeur: FAVERO, Cédrick, F-42160 Saint-Romain-Le-Puy (FR)
(74) Mandataire: Lavoix
(86) Numéro de dépôt international: PCT/FR2011/052898
(87) Numéro de publication internationale: WO 2012/076816

(56) Documents cités:
- WO-A1-2010/133258
- FR-A1- 2 945 542
- US-A- 4 218 327
- US-A- 4 795 575
- US-A- 4 925 578

## Description

La présente invention concerne le domaine technique de la récupération assistée du pétrole dans un gisement. Plus précisément, la présente invention a pour objet un procédé amélioré de récupération assistée du pétrole grâce à l'introduction dans le gisement d'une solution aqueuse d'un polymère hydrosoluble mettant en oeuvre une séquence particulière pour la préparation de la solution aqueuse de polymère hydrosoluble utilisée. Notamment, le procédé selon l'invention comprend une désoxygénation chimique de l'eau servant à dissoudre une composition optimisée à base d'un ou de plusieurs polymère(s) hydrophile(s), afin de supprimer les effets dégradant de l'oxygène sur ce(s) polymère(s) et ainsi améliorer les performances de balayage du réservoir de pétrole.

La récupération du pétrole brut contenu dans les gisements s'effectue de manière générale en plusieurs temps :
La production résulte d'abord de l'énergie naturelle des fluides et de la roche qui se décompriment. A l'issue de cette phase de déplétion, la quantité d'huile récupérée en surface représente en moyenne quelque 5 à 15 % de la réserve initiale. Il est donc nécessaire dans un deuxième temps d'employer des techniques visant à accroître le rendement de récupération en maintenant la pression du champ.

La méthode la plus fréquemment mise en oeuvre consiste à injecter de l'eau dans le gisement par le biais de puits injecteurs dédiés à cette fin. On parle alors de récupération secondaire. Cette deuxième phase s'arrête lorsque la teneur en eau dans le mélange produit par les puits producteurs est trop importante. Le gain, ici, en termes de taux de récupération additionnel est de l'ordre de 10-20%.

Les autres techniques utilisables sont regroupées sous le nom de récupération assistée du pétrole (RAP ou EOR). Leur but est de récupérer entre 10 et 35% d'huile additionnelle. Sous le terme de récupération assistée du pétrole sont connues diverses techniques thermiques, ou non telles que les techniques dites électriques, miscible, vapeur, ou encore chimiques de récupération améliorée du pétrole restant en place (cf. Oil & gas science and technology - revue IFP, vol 63 (2008) n°1, pp 9-19). Par pétrole, il faut entendre tout type d'huile, à savoir huile légère comme huile lourde, voire bitumineuse.

L'invention s'attache plus précisément à la récupération assistée du pétrole par voie chimique impliquant au minimum l'injection de polymères hydrosolubles sous forme de solution diluée.

L'efficacité du balayage par injection d'eau est généralement améliorée par l'addition de polymères hydrosolubles. Les bénéfices attendus et prouvés de l'utilisation de polymères - au travers de la « viscosification » des eaux injectées - sont l'amélioration du balayage et du contrôle de la mobilité dans le champ, afin de récupérer l'huile rapidement et efficacement. Ces polymères vont augmenter la viscosité de l'eau.

Il est connu de l'homme du métier que les polymères hydrosolubles synthétiques et, en particulier ceux à base d'acrylamide, sont des polymères très avantageux pour augmenter la viscosité des solutions aqueuses et sont de fait, majoritairement utilisés en récupération assistée du pétrole.

Il existe différents procédés de récupération assistée du pétrole. On peut citer le procédé dit « surfactant -polymère » ou SP ou encore « alcalin - surfactant - polymère » ou ASP, dans lesquels une quantité d'agent tensioactif est présente dans la solution aqueuse éventuellement alcaline de polymère hydrosoluble qui est injectée dans le puits. Ces agents tensioactifs permettent d'abaisser la tension superficielle entre le pétrole de la formation souterraine et la solution injectée. L'agent alcalin, quant à lui, réagit avec les composés présents dans le pétrole brut, pour former *in situ* des tensioactifs supplémentaires qui participent à l'émulsification du pétrole.

L'injection de la solution visqueuse est, dans tous les cas, continue. Au bout d'un certain temps, allant de plusieurs semaines à plusieurs mois, le polymère, l'eau et le pétrole ressortent du réservoir par le puits producteur où le pétrole est alors isolé. De grandes quantité d'eau sont coproduites et il est également connu d'épurer l'eau du pétrole récupéré et de la recycler pour des raisons économiques et environnementales évidentes, mais aussi parfois de disponibilités réduites en eau. Le plus souvent la solution de polymère injectée est directement préparée sur site, à proximité du gisement de pétrole dans laquelle elle va être utilisée. L'eau recyclée, mais aussi l'eau de mer, de rivière, de barrage ou d'aquifère directement disponible sur le site va directement être utilisée. Elle doit être compatible avec le polymère. Cette eau doit donc être conditionnée pour la dissolution du polymère, car l'eau initiale contient, le plus souvent de l'oxygène, du sulfure d'hydrogène et divers autres gaz, du fer et divers autres métaux qui sont néfastes pour la stabilité du polymère.

En effet, de manière connue dans l'art antérieur, la dégradation chimique des polymères est due principalement à la formation de radicaux libres qui vont réagir avec la chaine principale du polymère et engendrer une chute de la masse molaire. Il en résulte une chute de viscosité de la solution à base de polymère.

La présence d'oxygène est le facteur le plus néfaste quant à la dégradation du polymère. Cette réaction de dégradation des polymères par l'oxygène est amplifiée par la présence de métaux tels que le fer, mais aussi le cuivre, le nickel, ou par la présence de sulfure d'hydrogène.

Il est connu dans l'art antérieur d'utiliser des agents désoxygénant (sulfite, bisulfite, dithionite, hydrazine,...), on parle alors de désoxygénation chimique. On peut d'ailleurs citer les demandes FR 2 945 542 et WO 2010/133 258, au nom du déposant, décrivant une composition à base de polymères anioniques ou de (co)polymères amphotères hydrosolubles apte à viscosifier les fluides d'injection pour la récupération du pétrole. Cette composition contient, avant dilution avec le fluide d'injection, en outre au moins 3 agents stabilisants choisi dans le groupe comprenant les agents désoxygénants, les agent précipitants, les agents capteurs de radicaux, les agents complexants et les agents sacrificiels, ledit agent stabilisant étant apte à empêcher la dégradation chimique du polymère une fois le polymère introduit
dans le fluide d'injection. Le brevet US 4 795 575, quant à lui, décrit un procédé de récupération assisté du pétrole prévoyant l'injection d'une solution aqueuse alcaline ne contenant substantiellement pas d'oxygène dissous du fait de l'incorporation d'un agent désoxygénant tel qu'un bisulfite présent entre 100 et 500 ppm dans la solution aqueuse injectée.

Il existe également des procédés de désoxygénation non chimiques à base de gaz inertes. Le gaz déplace l'oxygène présent dans la solution, soit par bullage, soit par des cycles de rééquilibrage de la pression par ce gaz. Ces procédés sont souvent couteux et ne sont pas utilisés dans le cadre de l'invention.

Dans des concentrations inférieures à 50 ppb d'oxygène dissout, la dégradation du polymère est faible et acceptable. Dans ce cas, une quantité relativement faible d'agent désoxygénant, telle qu'envisagée par la demanderesse dans sa demande de brevet FR2945542, est suffisante pour neutraliser l'oxygène.

Par contre, pour des concentrations supérieures à 50 ppb d'oxygène, la dégradation du polymère est importante et diminue de facto les performances de la solution à base de polymère, lors du balayage du puits de pétrole. Il est alors nécessaire d'ajouter des quantités plus importantes d'agents désoxygénants.

Il convient également de souligner que les sources de contamination de l'eau par de l'oxygène (O₂) dissout sont nombreuses. Il y a des sources dites « maîtrisables » car elles sont soit d'origine volontaire, soit d'origine identifiée, et des sources dites « non maîtrisables » car non constantes.

Les sources « maîtrisables » d'O₂ sont, par exemple :
- la présence initiale d'oxygène dans l'eau (source non volontaire) ;
- l'oxygénation ou l'épuration (filtration, précipitation......) volontaire de l'eau pour éliminer les gaz, métaux et impuretés contenus dans l'eau ;
- l'oxygène contenu dans les solutions aqueuses ajoutées dans le circuit, comme par exemple les solutions d'alcalins ou les compositions à base de tensioactifs, co-tensioactifs, solvants et/ou co-solvant.

Les sources « non maîtrisables » d'oxygène sont, par exemple :
- les fuites d'oxygène dans le circuit ;
- les fuites d'oxygène au niveau de l'unité de dissolution du polymère ;
- l'oxygène présent dans les particules ou grains de carbonate et/ou de polymère par exemple, ajoutés dans le circuit, qualifié d'oxygène occlus.

Dans un procédé de récupération assistée du pétrole qui implique l'utilisation d'une solution visqueuse de polymère(s) hydrosoluble(s), il est régulièrement exercé un contrôle à la fois de l'oxygène présent dans l'eau servant à la dissolution des différents produits chimiques, mais aussi du potentiel red/ox de l'eau désoxygénée. Cependant, ce type de contrôle ayant lieu sur équipement de surface, et la réaction de réduction de l'oxygène par les agents désoxygénant n'étant pas instantanée, il n'est pas permis de savoir avec certitude s'il n'y a pas de fuite d'oxygène, entre la mesure du taux d'oxygène ou du potentiel red/ox, et l'injection dans le puits. De ce fait, un excès d'agent désoxygénant est généralement ajouté pour se prémunir de ces fuites et de ces pollutions éventuelles.

Cependant, il est connu de l'homme de l'art qu'un large excès d'agent désoxygénant mène aussi à une dégradation du polymère. En effet, une réintroduction d'oxygène, dans un système comprenant un polymère en solution avec un excès d'agent désoxygénant est extrêmement néfaste pour le polymère. En effet, il se crée une réaction d'oxydoréduction entre l'O₂ et l'agent désoxygénant donnant des radicaux qui dégradent alors la chaîne polymérique, ce phénomène étant accentué en présence d'ions Fe²⁺. La dégradation du polymère peut alors être très rapide et les performances de balayage du puits de pétrole s'en trouvent drastiquement affectées. Or, les risques de réintroduction d'oxygène sont importants, compte tenu des différentes sources de contamination en oxygène précédemment rappelées.

Il est donc généralement recommandé d'avoir un dosage précis et maîtrisé en agent désoxygénant, afin d'avoir un léger excès stoechiométrique de l'ordre de 10 à 20%, de cet agent dans le milieu.

Par ailleurs, dans l'art antérieur, il a été envisagé d'utiliser différents additifs stabilisants. Parmi eux, la demanderesse s'est plus précisément intéressée à la mise en oeuvre d'agents capteurs de radicaux et d'agents sacrificiels. Des formulations contenant de l'eau, un polymère hydrosoluble, un agent désoxygénant, un agent capteurs de radicaux et un agent sacrificiel ont déjà été décrites dans l'art antérieur. On peut notamment citer les documents suivants :
- le brevet US 4,925,578 décrit une composition aqueuse de pH supérieur à 10 contenant un polymère d'acrylamide, un agent désoxygénant, un agent capteurs de radicaux et un alcool utilisable en récupération assisté du pétrole. Les composés sont ajoutés dans une saumure alcaline, le tout est mélangé et utilisé. L'ajout d'agent désoxygénant s'effectue en même temps que les autres composés. L'utilisation de cette composition dans le domaine de la récupération assisté du pétrole est décrite dans le brevet US 4,795,575.
- le brevet US 4 317 758 concerne, quant à lui, une solution aqueuse contenant un polymère d'acrylamide, un couple oxydant / réducteur et un agent stabilisant soufré. Il est également envisagé d'utiliser des composés hydrosulfite de sodium comme agent désoxygénant, thiourée comme agent capteurs de radicaux et mercaptoéthanol, mais aucune séquence d'introduction n'est présentée comme avantageuse. Deux séquences d'introduction différentes sont néanmoins envisagées : une dans laquelle le polymère et les additifs sont ajoutés séparément, et une autre dans laquelle tous les additifs sont uniformément mélangés avec le polymère avant que la composition ne soit utilisée.
- Sorbie dans son ouvrage intitulé « Polymer Improved Oil Recovery » 2000, Blackie and Son Ltd (Glasgow and London) pages 90-104 décrit un système de protection des biopolymères contenant de la thiourée, de l'isopropanol et du sulfite de sodium. Une séquence préférentielle d'introduction en solution aqueuse dans laquelle l'agent désoxygénant, puis les agents capteurs de radicaux, et enfin le polymère sont successivement additionnés, est proposée.
- Wellington dans le SPE 9296 propose de stabiliser des bio polymères grâce à l'ajout d'agent désoxygénant avant que le polymère ne soit ajouté et d'agent capteur de radicaux pour protéger le polymère contre d'éventuels radicaux libres qui pourraient se former lors d'une contamination accidentelle à l'oxygène. Deux séquences particulières sont envisagées : une première dans laquelle le polymère est ajouté dans un mélange d'eau, d'agent désoxygénant et d'agent capteur de radicaux, et une deuxième séquence dans laquelle le polymère est ajouté dans une solution aqueuse contenant un excès d'agent désoxygénant, puis cette solution est diluée dans une solution aqueuse contenant un agent capteur de radicaux et un agent sacrificiel. Wellington décrit également l'effet synergique lié à l'association de la thiourée (agent capteur de radicaux) et de l'IPA (l'agent sacrificiel).
   En outre, Wellington dans US 4 218 927 décrit un procédé comparable, mais qui ne précise pas la séquence d'étapes d'ajout des composants de la solution aqueuse telle qu'elle fait partie de l'invention revendiquée actuellement.
- Shupe dans le SPE 9299 décrit comment stabiliser les polyacrylamides en testant les effets de différents additifs, sans pour autant tester des combinaisons complexes et sans donner de séquence d'introduction.

Néanmoins, la demanderesse a mis en évidence que les différents procédés de préparation de composition aqueuse de polymère(s) hydrosolubles(s) décrits dans les documents ci-dessus commentés ne permettent pas une protection optimale des polymères hydrosolubles utilisés sur des champs de pétrole. Il subsiste donc un besoin pour une solution permettant d'obtenir la protection maximale des polymères, sachant que le nombre de séquences combinant l'addition de polymère et d'additifs stabilisants envisagés dans l'art antérieur peut se comptabiliser en milliers.

Dans ce contexte, l'objectif de l'invention est de palier aux problèmes dus aux différentes sources d'oxygène maîtrisables et non maîtrisables et de fournir un nouveau procédé de récupération assistée du pétrole dans un gisement grâce à l'introduction dans le gisement d'une solution aqueuse d'au moins un polymère hydrosoluble utilisant un procédé spécifique pour la préparation de la composition aqueuse du ou des polymère(s) hydrosolubles(s) introduite qui permette une protection optimale des polymères hydrosolubles utilisés sur des champs de pétrole. La présente invention a pour objet un procédé amélioré de récupération assistée du pétrole mettant en oeuvre une désoxygénation chimique de l'eau servant à dissoudre le ou les polymère(s) hydrosoluble(s), afin, d'une part, de supprimer les effets dégradant de l'oxygène sur ce(s) polymère(s) et ainsi améliorer les performances de balayage du réservoir de pétrole et, d'autre part, de supprimer les méfaits que pourrait présenter la présence d'un agent désoxygénant en excès.

Un autre objet de l'invention est de fournir un procédé de préparation d'une composition aqueuse de polymère(s) hydrosolubles(s) qui permette d'obtenir une viscosité maximale de la solution visqueuse ainsi préparée et injectée dans le puits de pétrole, et de maintenir un haut niveau de viscosité lors de la propagation de cette solution dans le réservoir. En effet, l'opération de balayage d'un réservoir de pétrole est d'autant plus efficace que la viscosité de la solution polymérique injectée reste stable durant sa propagation.

Pour atteindre ces objectifs, la présente invention concerne un procédé de récupération assistée du pétrole dans un gisement grâce à l'introduction dans le gisement d'une solution aqueuse d'au moins un polymère hydrosoluble caractérisé en ce que ladite solution aqueuse est préparée par dissolution d'une composition à base de polymère contenant au moins un polymère hydrosoluble, au moins un agent capteur de radicaux, et au moins un agent sacrificiel, dans une solution aqueuse, qui a été soumise, préalablement à l'introduction de la composition à base de polymère, à un traitement avec au moins un agent désoxygénant. Le procédé de préparation de la solution aqueuse, ainsi que la solution aqueuse elle-même, auxquels se rapporte spécifiquement la présente invention, ont été défini dans la revendication 1 en termes de la viscosité et du polymère hydrosoluble de la solution aqueuse, ainsi qu'en termes des étapes successives du procédé et de la quantité d'agent désoxygénant utilisé dans le procédé.

Il a été découvert de manière surprenante et totalement inattendue que la séquence d'introduction ci-dessus permettait d'obtenir une stabilité accrue du polymère dans le puits de pétrole. La mise en oeuvre d'une composition contenant à la fois, au moins un polymère, au moins un agent capteur de radicaux et au moins un agent sacrificiel confère une protection optimum du polymère durant toutes les phases, de son introduction dans une solution aqueuse, en minimisant les risques de dégradation et de perte en viscosité, durant l'injection, puis après l'introduction de la solution aqueuse contenant le polymère dans le gisement de pétrole, et ce même lorsque la solution aqueuse contient un large excès d'agent désoxygénant.

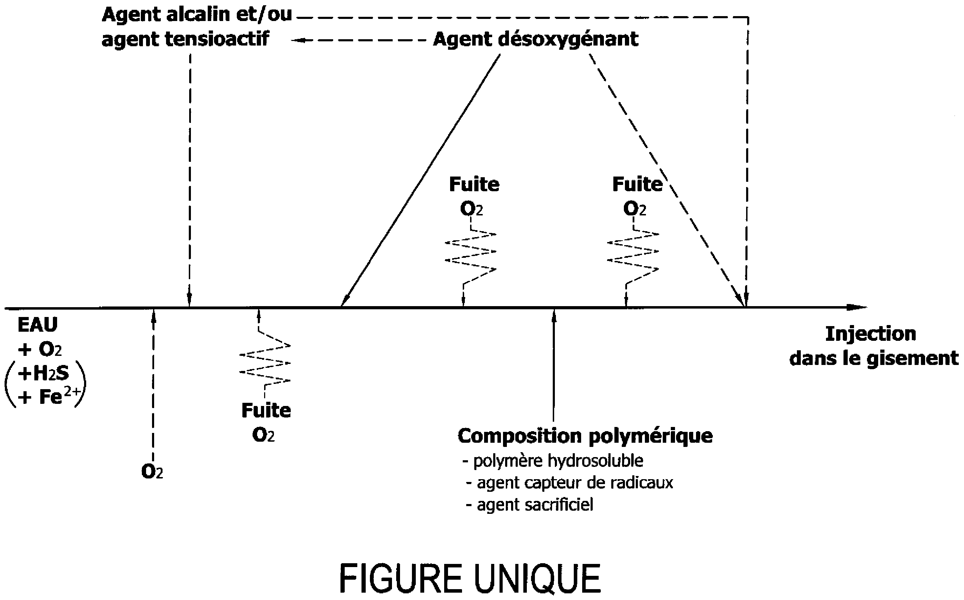

La description qui va suivre, en référence à la **Figure unique** va permettre de mieux comprendre l'invention. Cette **Figure unique** illustre schématiquement un exemple de mise en oeuvre de l'invention, les flèches représentées en pointillées étant optionnelles. Le procédé amélioré de récupération assistée du pétrole selon l'invention met en oeuvre un traitement désoxygénant d'une solution aqueuse, contenant, notamment, au moins 50 ppb d'oxygène dissout, de manière à supprimer l'effet néfaste de l'O₂ dissout sur le ou les polymères qui vont être mis en solution dans cette solution aqueuse traitée. Comme le montre la **Figure unique**, le procédé selon l'invention comprend les deux étapes essentielles successives suivantes :
- une étape de désoxygénation de la solution aqueuse par addition d'au moins un agent désoxygénant, en excès stoechiométrique par rapport à l'oxygène dissout dans la solution aqueuse dans laquelle il est introduit ;
- puis, après l'étape de désoxygénation, une étape de dissolution avec la solution aqueuse d'une composition contenant au moins un polymère hydrosoluble, au moins un agent capteur de radicaux, et au moins un agent sacrificiel.

Selon des variantes de mise en oeuvre, qui peuvent éventuellement être combinées entre elles :
- avant l'addition d'agent désoxygénant, la solution aqueuse est soumise à une étape volontaire d'oxydation et/ou d'épuration, de manière à réduire la teneur en H₂S et/ou Fe²⁺ notamment,
- un agent alcalin et/ou une composition contenant au moins un agent tensioactif est introduit dans la solution aqueuse, avant ou après l'étape de traitement avec un agent désoxygénant, et avant, après ou parallèlement à l'étape de dissolution de la composition à base de polymère,
- la solution aqueuse est soumise à une étape de traitement supplémentaire avec au moins un agent désoxygénant, avant ou après l'introduction de la composition à base de polymère. Cette étape de traitement supplémentaire avec au moins un agent désoxygénant, peut notamment être réalisée juste avant l'injection de la composition aqueuse contenant le ou les polymères hydrosolubles dans le puits.

Selon la première variante, l'étape d'oxydation permettant de réduire la teneur en H₂S et/ou en Fe²⁺ peut s'effectuer par ajout, soit préférentiellement de dioxygène (O₂) soit d'un agent oxydant choisi, par exemple, parmi l'ozone, l'eau oxygénée, le persulfate, le perborate, l'hypochlorite d'alcalin ou d'alcalino-terreux, etc.... L'hypochlorite de sodium produit par électrolyse à partir de l'eau de production ou de la saumure pourra par exemple être utilisé.

L'invention trouve tout son intérêt, en particulier lorsqu'avant l'addition d'au moins un agent désoxygénant, la solution aqueuse contient au moins 50 ppb d'oxygène (correspondant à 50mg d'O₂ pour 1 tonne de solution aqueuse). La mesure du taux d'oxygène dissout peut se faire selon toute technique bien connue de l'homme de l'art, par exemple grâce à des sondes mesurant le taux d'oxygène dissout telles que commercialisées par Mettler Toledo. Cette méthode sera préférée à une autre méthode de mesure dite des réactifs colorimétriques qui consiste à ajouter une dose liquide de réactif, par exemple de la société Chemets, dans la solution à tester, et à évaluer la quantité d'oxygène dissout en fonction du changement de couleur observé.

Compte tenu des différents risques de fuite sur le circuit pouvant entraîner une introduction d'oxygène (dont certains sont schématiquement représentés sur la **Figure unique**), lors de l'étape de désoxygénation, l'agent désoxygénant est additionné en large excès par rapport à l'oxygène dissout dans la solution aqueuse, avec un excès stoechiométrique d'au moins une fois la stoechiométrie (100 %) en oxygène dissout dans la solution aqueuse. Cet excès peut aller jusqu'à 50 fois la stoechiométrie et variera, de préférence, entre 1 fois et 20 fois la stoechiométrie en oxygène dissout dans la solution aqueuse.

Le fait d'introduire l'agent désoxygénant préalablement à la dissolution de la composition en polymère contenant les additifs protecteurs, permet de considérablement limiter le risque de dégradation du polymère, en particulier pour le cas où, à la fois, de l'oxygène et d'autres contaminants seraient présents ou introduits dans la solution aqueuse tout au long des procédés de dissolution, d'injection et de propagation. En effet, la solution aqueuse avant l'étape de traitement avec un agent désoxygénant contient de l'eau dans laquelle est dissout de l'O₂, mais, souvent également, de l'H₂S et des ions Fe²⁺ La présence à la fois d'au moins un agent capteur de radicaux et d'au moins un agent sacrificiel directement dans la composition à base de polymère qui va être dissoute et injectée, permet d'une part de protéger le polymère avant son introduction dans la solution aqueuse, et d'autre part de lutter contre les attaques de radicaux libres qui pourraient être formés par réaction d'oxydoréduction entre l'agent désoxygénant et l'O₂ qui pourrait accidentellement, par la suite, contaminer la solution aqueuse, ce phénomène étant accentué en présence d'ions Fe²⁺ L'agent capteur de radicaux et l'agent sacrificiel agissent tous deux sur les radicaux, de préférence, avant qu'ils n'attaquent le polymère. Le premier (l'agent capteur de radicaux) capte rapidement une partie des radicaux formés et il se met alors en place une réaction d'équilibre chimique réversible dans lequel l'agent peut, en même temps, capter et re-produire des radicaux, la quantité des radicaux captés étant plus grande que la quantité de radicaux re-produite. Son mode d'action, même si non complet permet d'agir rapidement. Dans le cas où il reproduit des radicaux, alors l'agent devient à nouveau disponible pour capter d'autres radicaux. Afin de compléter cette action, l'agent sacrificiel consomme les radicaux en les transformant en composés chimiques sans effet sur la chaîne polymérique. Par exemple, la fonction alcool d'un agent sacrificiel est transformée en fonction cétonique par consommation d'un radical. Ce mode d'action est dit ultime ou non réversible et complète avantageusement celui de l'agent capteur de radicaux.

De manière optionnelle, avant l'addition d'agent désoxygénant, la solution aqueuse qui contient de l'eau qui peut provenir de différentes sources : eau épurée, eau de mer, eau de rivière, eau de barrage, eau d'aquifère ou eau recyclé suite à une précédente utilisation dans la récupération assistée du pétrole, peut avoir subie une étape d'oxydation, et notamment d'oxygénation et/ou d'épuration de manière à réduire la teneur en autres gaz (notamment H₂S), en métaux (notamment des ions Fe²⁺) et/ou impuretés présents.

Comme illustré sur la **Figure unique**, il est possible, en plus de l'étape essentielle de traitement avec un agent désoxygénant dans le cadre de l'invention, que l'on nommera par la suite « étape de traitement principale » (et qui est symbolisée avec un trait plein sur la **Figure unique**), il est possible d'introduire, de manière supplémentaire, un agent désoxygénant, identique ou différent de celui utilisé dans l'étape de traitement dite « principale », à différents stades du procédé.

Selon une première variante de mise en oeuvre, un agent alcalin et/ou une composition tensioactive contenant au moins un agent tensioactif et éventuellement un co-tensioactif et /ou un solvant et/ou un co-solvant, peu(ven)t être introduit(s) dans la solution aqueuse, avant l'étape de traitement principale avec un agent désoxygénant et avant l'étape de dissolution de la composition à base de polymère,. Le ou les agents alcalin et/ou tensioactif peuvent optionnellement être désoxygénés de manière chimique, à l'aide d'un agent désoxygénant. Dans ce dernier cas, une quantité d'agent désoxygénant sera donc ajoutée par rapport à l'étape de traitement principale prévu dans le cadre de l'invention. L'agent désoxygénant est, le plus souvent, additionné en excès par rapport à l'oxygène dissout dans la solution aqueuse alcaline et/ou tensioactive, notamment avec un excès stoechiométrique d'au moins 25%. Si une étape de désoxygénation supplémentaire a également lieu, cette dernière sera, de préférence, réalisée avant l'introduction de l'agent alcalin et de l'agent tensioactif.

Selon une seconde variante de mise en oeuvre, un agent alcalin et/ou une composition tensioactive contenant au moins un agent tensioactif et éventuellement un co-tensioactif et /ou un solvant et/ou un co-solvant, peu(ven)t être introduit(s) dans la solution aqueuse, après l'étape de traitement principale et après l'étape de dissolution de la composition à base de polymère, avec un agent désoxygénant. Les mêmes autres conditions que la première variante sont, de préférence, reprises dans ce cas (quantité d'agent désoxygénant et étape de traitement).

Selon une troisième variante de réalisation pouvant être combinée aux précédentes, il est également possible d'introduire un agent désoxygénant, après le mélange de la composition à base de polymère avec la solution aqueuse ayant subi une première désoxygénation. Dans le cadre de l'invention, un excès d'agent désoxygénant n'est pas gênant. Notamment, on pourra ajouter, au plus, la même quantité d'agent désoxygénant que dans l'étape principale. Une telle introduction d'agent désoxygénant pourra, par exemple, être réalisée juste avant l'injection de la composition aqueuse contenant le ou les polymères hydrosolubles dans le puits.

La dissolution de la composition à base de polymère dans la solution aqueuse ayant été préalablement soumise à une étape de désoxygénation, peut se faire par tout moyen. Il est possible d'ajouter la composition à base de polymère sur une ligne de circulation de la solution aqueuse comprenant au moins un agent désoxygénant. Cette composition à base de polymère peut être sous forme de poudre ou d'émulsion inverse. Dans le cas où elle est sous forme de poudre, cette dissolution peut se faire, notamment, au moyen d'une unité telle que décrite dans la demande de brevet WO 2008/107492, et commercialisée par la demanderesse sous la référence PSU « Polymer Slicing Unit ».

On pourra se référer à la demande de brevet WO ci-dessus pour plus de détails sur l'unité qui peut être mise en oeuvre dans le cadre de l'invention pour l'incorporation de la composition à base de polymère au sein de la solution aqueuse. Cette unité fonctionne sous atmosphère inerte et permet de diminuer les risques d'introduction d'oxygène dans cette étape de dissolution du polymère dans la solution aqueuse.

Dans le cadre de l'invention, la solution aqueuse finale contenant le ou les polymères souhaités est ensuite injectée dans un gisement de pétrole, selon toute technique connue de l'homme de l'art dans les procédés de récupération assistée du pétrole également nommés « EOR ». Sa préparation est réalisée sur site, juste en amont de son injection dans le gisement. En général, tous les composants introduits dans la solution aqueuse (composition à base de polymère, mais également O₂, dans le cas d'un prétraitement pour éliminer Fe et H₂S notamment, agent alcalin, agent tensioactif) sont, le plus souvent additionnés sur une ligne de circulation de la solution aqueuse comme illustré schématiquement sur la **Figure unique.** Les quantités additionnées seront déterminées, en fonction des quantités souhaitées qui seront notamment détaillées dans la suite de la description. Concernant la composition à base de polymère, celle-ci sera, de préférence introduite de manière à obtenir une concentration en polymère hydrosoluble d'au plus 10 g/l, et préférentiellement d'au plus 5g/l de solution aqueuse dans laquelle il est injectée. Au final, la solution aqueuse de polymère hydrosoluble obtenue qui va être injectée dans le gisement présente une viscosité optimale appartenant à la gamme allant de 2 à 200 cps (centipoises), (mesures de viscosité à 20°C avec un viscosimètre Brookfield avec un module UL ou S85).

Vont maintenant être détaillés dans un premier temps, les différents composés présents dans la composition à base de polymère, et dans un second temps ceux présents dans la solution aqueuse.

La composition à base de polymère se compose de deux parties, une partie dite active et une partie dite additive. La partie active est constituée exclusivement :
- du ou des polymère(s) hydrosoluble(s),
- du ou des agent(s) capteur(s) de radicaux,
- du ou des agent(s) sacrificiel(s).

La partie additive comprend tous les autres composants éventuellement présents dans la composition, et notamment des agents dits « additifs », optionnels qui n'ont toutefois aucun rôle dans les performances du procédé de la présente invention, parmi lesquels :
- de l'eau,
- des additifs, comme par exemple de l'huile, des tensioactifs nécessaires pour former l'émulsion inverse, ou rendre compatible les agents capteur de radicaux et sacrificiel et le polymère entre eux.

Il convient de noter que la composition à base de polymère ne contient pas d'agent désoxygénant.

La composition à base de polymère est constituée, en général, pour au moins 30% en masse de partie active et peut comprendre de 0 à 70% en masse de partie additive. Dans le cas où la composition à base de polymère se présente sous la forme d'une poudre la partie active représentera la majeure partie de la composition. Dans le cas d'une émulsion inverse, la partie additive contenant de l'eau constituera une part importante. Le plus souvent, la partie active comprend au moins 35% en masse de polymère hydrosoluble, de 0,1 à 35% en masse d'agent capteur de radicaux et de 0,1 à 35% en masse d'agent sacrificiel, étant entendu que la somme des proportions en polymère hydrosoluble, agent capteur de radicaux et agent sacrificiel constituant ladite partie active est égale à 100%. De ce fait, la composition à base de polymère comprend toujours au moins 10,5 % en masse de polymère hydrosoluble.

Le procédé selon l'invention est adapté à tout type de polymères hydrosolubles, connus pour avoir un rôle d'épaississants et/ou classiquement utilisés dans les procédés de récupération du pétrole et particulièrement les polymères hydrosolubles synthétiques.

Le ou les polymère(s) hydrosoluble(s) présent(s) dans la composition à base de polymère qui va être mélangée à l'eau désoxygénée présente(nt) un poids moléculaire supérieur ou égal à 1 million g/mol, notamment appartenant à la gamme allant de 1 à 25 millions g/mol, et sera choisi parmi les polymères à base d'acrylamide (représentant, de préférence, au moins 10% en moles) copolymérisé avec au choix l'acide acrylique, l'acide 2-acrylamido-2-méthylpropane sulfonique ou la N-vinyl pyrrolidone. Selon un mode de réalisation particulier, le polymère utilisé présente une anionicité inférieure à 70% en moles.

Selon l'invention, le ou les polymères hydrosolubles utilisés ne nécessitent pas de développement de procédé de polymérisation particulier. Ils peuvent être obtenus par toutes les techniques de polymérisation bien connues par l'homme de l'art (polymérisation en solution, polymérisation en suspension, polymérisation en gel incluant ou non une étape de co-hydrolyse ou de post-hydrolyse, polymérisation par précipitation, polymérisation en émulsion (aqueuse ou inverse) suivie ou non d'une étape de « spray drying » (séchage par atomisation ou sur tambour), polymérisation en suspension, polymérisation micellaire suivie ou non d'une étape de précipitation).

De part la sélection de monomères et des différents additifs de polymérisation, le polymère ou les polymères présents dans la composition peuvent présenter une structure linéaire, ramifiée, réticulée ou une architecture peigne (en anglais « comb polymer »), étoilée (en anglais « star polymer »).

La partie active de la composition à base de polymère pourra contenir, par exemple, au moins 35% en masse de polymère hydrosoluble, et de préférence au moins 50% en masse. La composition à base de polymère pourra ainsi contenir au moins 10,5% et, de préférence au moins 15%, en masse de polymère.

Les autres agents actifs utilisés dans la composition à base de polymère, à savoir agents capteurs de radicaux et agents sacrificiels agissent, vis-à-vis du polymère hydrosoluble comme des agents stabilisants. Ces différents agents sont bien connus de l'homme de l'art et ont été classifiés selon les dénominations ci-dessus, en fonction de leur mode de fonctionnement précédemment détaillé.

Dans le cadre de l'invention, les agents capteurs de radicaux qui seront, le plus souvent, utilisés sont choisis parmi des composés soufrés, des amines encombrées stériquement, des composés aromatiques et des nitroxides. Ces composés ont la faculté de capter le radical qui n'est alors plus immédiatement disponible pour dégrader le polymère. Il existe de nombreux capteurs de radicaux développés pour la stabilisation des polymères. A titre d'exemple, on peut citer les composés suivants : thiourée, 2-mercaptobenzothiazole, dimédone, N,N'-diméthylthiourée, N,N'-diéthylthiourée N,N'-diphénylthiourée, thiocyanate d'ammonium, tetraméthylthiuram disulfide, 2,2'-dithiobis(benzothiazole), diméthyldithiocarbamate de sodium, paraméthoxyphénol propyl, 3,4,5-trihydroxybenzoate, 2,6-di-tert-butyl-4-méthylphénol, 2,5-di(tert-amyl) hydroquinone, 4,4'-thiobis(6-tert-butyl-m-crésol), N-nitrosophénylhydroxylamine d'ammonium, butylhydroxyanisole, hydroxy-8-quinoléine, 4-hydroxy-2,2,6,6-tetraméthyl-pipéridinooxy, 5-hydroxy-1,4-naphtoquinone, (N-(1,3-diméthylbutyl)N' phényl-p-phénylènediamine, 2,6-di-tert-butyl-4-méthylphénol, 2,5-di(tert-amyl)hydroquinone, 4,4'-thiobis(6-tert-butyl-m-crésol), dicyandiamide, les dérivés de la guanidine, cyanamide, etc.

Cette liste ne peut être exhaustive de par le nombre de variations possibles sur ces chimies souvent complexes. Préférentiellement, le ou les agents capteurs de radicaux utilisés seront choisis parmi la thiourée, les alkyl thiourées, le mercaptobenzoimidazole (MBI), le mercaptobenzothiazole (MBT) et leurs combinaisons tels qu'utilisés par Shell, Diafloc et Nitto dans les brevets US 4,317,759, US 4,925,578, US 4,481,316, US 4,795,575 et US 3,235,523, le butyl hydroxyanisole, le paraméthoxy phénol, le quinolinol tel que mentionné dans JP57-159839 de Mitsubshi Chemicals, la 5,5 diméthyl-1.3-cyclohexane dione comme décrit dans le brevet US 4,622,356 de American Cyanamid, le thiocyanate de sodium comme décrit dans le brevet US 3,234,163 de Dow, les phényl phosphoniques et les phosphites

En plus de la performance, la prise en compte des critères physico chimiques, toxicologique et économique rend avantageux l'utilisation de composé comme la N,N'-diéthylthiourée, la N,N'-diméthylthiourée, la diphényl guanidine, le mercaptobenzothiazole et/ou le mercapto benzoimidazole, sans que cela soit limitatif.

La partie active de la composition à base de polymère qui va être mélangée à la solution aqueuse désoxygénée contient entre 0,1 et 35% en masse d'agent(s) capteur(s) de radicaux. Lorsque plusieurs agents capteurs de radicaux sont utilisés cette quantité correspond à la quantité totale d'agents capteurs de radicaux.

La partie active de la composition à base de polymère contient également un ou plusieurs agent(s) sacrificiel(s). Le plus souvent le ou les agent(s) sacrificiel(s) appartiennent à la famille des alcools, comme décrit dans les documents US 4141842 et JP57159839. Il est également possible d'utiliser un monomère comme décrit dans la demande de brevet FR 2604444 à laquelle on pourra se référer pour plus de détails. L'alcool de par sa fonction hydroxyle est oxydé dans sa forme cétonique et consomme ainsi le radical, alors que le monomère de par sa double liaison consomme le radical par polymérisation radicalaire. La liste des alcools et monomères utilisables est quasi infinie. La plupart des monomères constituants les polymères hydrosolubles conviennent et le chlorure de diallyl diméthyl ammonium, l'acrylamide et le méthacrylamide peuvent être cités comme monomère de choix, sans que cela soit limitatif.

Les alcools peuvent être des mono alcools ou des polyols et les critères de choix sont le nombre de fonction hydroxyle par unité massique et la solubilité dans l'eau. Plus particulièrement d'intérêt, sans que cela soit non plus limitatif, les alcools suivants peuvent être cités : le glycérol, le propylène glycol, le triméthylèneglycol, l'isopropanol, le 1,2-butanediol, le 1,3-butanediol, le 1,4-butanediol, le 2,3-butanediol, le 1,2,4-butanetriol, le pentaérythritol (PET), le triméthyloléthane, le néopentylglycol, le 1,2-pentanediol, le 2,4-pentanediol, le 2,3-pentanediol, le triméthylolpropane, le 1,5-pentanediol, l'alcool polyvinylique partiellement ou totalement hydrolysé...

La partie active de la composition à base de polymère qui va être mélangée à la solution aqueuse désoxygénée contient entre 0,1 et 35% en masse d'agent(s) sacrificiel(s). Lorsque plusieurs agents sacrificiels sont utilisés cette quantité correspond à la quantité totale d'agents sacrificiels.

La solution aqueuse dans laquelle est introduite la composition à base de polymère comprend :
- de l'eau,
- au moins un agent désoxygénant,
- éventuellement au moins une composition tensioactive contenant au moins un agent tensioactif et éventuellement un co-tensioactif et/ou un solvant et/ou un co-solvant,
- éventuellement au moins un agent alcalin.

Les agents désoxygénant (également nommés parfois agents réducteurs) interviennent directement sur l'oxygène qui engendre ou accélère la formation de radicaux. Durant l'étape de désoxygénation selon l'invention, les agents désoxygénant qui peuvent être utilisés sont, à titre non exhaustif, des composés tels que les sulfites, les bisulfites, les métabisulfites, les dithionites des métaux alcalins ou alcalino-terreux, et notamment de sodium, l'hydrazine et ses dérivés hydroxylamine ou encore un mélange borohydrure de sodium et bisulfite. Leur utilisation pour les polyacrylamides est décrite dans le brevet US 3,343,601. Tous agissent en tant qu'agent réducteur modifiant le potentiel redox de la solution aqueuse dans laquelle ils sont introduits. Il est également possible d'envisager d'utiliser un agent désoxygénant choisi parmi les sulfites organiques tels que les sulfites alkylés, les hydrosulfites d'alkyle, les sulfinates, les sulfoxylates, les phosphites, mais aussi l'acide oxalique ou formique, les sels d'érythorbate, les carbohydrazides. Ces agents désoxygénant permettent d'éliminer les traces d'oxygène dans l'eau d'injection pour atteindre typiquement des teneurs en oxygène dissout inférieures à 50 ppb (partie par billion). Préférentiellement, en accord avec les critères physico chimiques, toxicologiques, et industriels, les composés désoxygénant de type sulfites organiques et inorganiques sont particulièrement avantageux. On citera, pour exemple, le Na₂SO₃ (sulfite de sodium), la NaDT (dithionite de sodium) et le bisulfite d'ammonium. La désoxygénation peut être réalisée avec un seul agent désoxygénant ou un mélange d'agents désoxygénant.

Comme indiqué précédemment, l'eau avec laquelle la composition à base de polymère va être mélangée peut contenir une composition à base de tensioactifs. Les tensioactifs (ou surfactants) sont de toutes sortes, à savoir anioniques, cationiques, non ioniques, zwitterioniques et de structure variées, à savoir linéaires geminis, ramifiés.

Le composé tensioactif pourra être formulé avec si nécessaire des solvants et co-solvants appropriés pour obtenir les caractéristiques physico chimiques souhaitées. Ces variations n'impacte en rien le bénéfice attendu de la présente invention. Les quantités de composés tensioactifs présents correspondent généralement de 0,5 à 15 fois la masse totale de polymère hydrosoluble présent dans la solution aqueuse, après ajout de la composition à base de polymère.

Il est également possible que l'eau avec laquelle la composition à base de polymère va être mélangée contienne un ou plusieurs agents alcalins, par exemple choisis parmi les hydroxydes, les carbonates, les borates et les métaborates de métaux alcalins ou d'alcalino-terreux. De préférence, l'hydroxyde de sodium ou le carbonate de sodium sera utilisé. Les quantités d'agent alcalin correspondent généralement de 0,5 à 15 fois la masse totale de polymère hydrosoluble utilisé.

Les exemples ci-après permettent d'illustrer l'invention.

### Exemples

Les expériences ont été réalisées en utilisant une eau de production de réservoir de pétrole qui a préalablement été épurée de son huile résiduelle et de ses solides en suspensions à des valeurs inférieures respectivement à 50 et 20 ppm. Cette eau présente donc les caractéristiques d'injectivité nécessaires pour dissoudre du polymère avec de bonnes caractéristiques d'injectivités lors de la réinjection dans le réservoir de pétrole. L'eau contient une teneur en H₂S de 67 ppm et une teneur en Fe²⁺ de 3 ppm. Ces teneurs sont dictées par les conditions et la géologie du réservoir et l'état des équipements de production du pétrole. Ces teneurs sont celles mesurées à la fin de l'épuration par flottation et filtre à écorce de noix (nutshell).

Le polymère utilisé à une concentration de 1000 ppm est un copolymère d'acrylamide (70 mol%) et d'acide acrylique (30 mol%) de poids moléculaire 20 millions de g/mol,(Flopam FP3630S)

La saumure dans laquelle le polymère et les différents additifs ont été ajoutés a la composition suivante :

| **Saumure test à 4 700 mg/l** | | |
|---|---|---|
| *Pour 1 000 g* | | |
| NaCl | 2,657 | g |
| KCl | 0,03 | g |
| CaCl₂,2H₂O | 0,834 | g |
| Mg Cl₂,6H₂O | 1,004 | g |
| Na₂SO₄ | 0,611 | g |

Cette saumure présente une température de 45°C et le réservoir de pétrole est lui à une température de 65°C.

La saumure utilisée contient 125 ppb d'O₂.

Une première série d'essais est réalisée avec les différents additifs suivants :
- pour l'agent désoxygénant : le sulfite de sodium (Na₂SO₃) à 5 ppm. Il faut 7,88 ppb de Na₂SO₃ pour consommer 1 ppb d'O₂: 5 ppm correspondent donc à une désoxygénation à 5 fois la stoechiométrie.
- pour l'agent sacrificiel : le pentaerythritol (PET) à 250 ppm
- pour l'agent capteur de radicaux : la N,N'-diéthylthiourée à 300 ppm

### Exemple comparatif 1

Le polymère est préalablement mélangé avec l'agent désoxygénant, l'agent sacrificiel et l'agent capteur de radicaux. Le mélange est ensuite dissout dans la saumure.

### Exemple comparatif 2

Le polymère est d'abord dissout dans la saumure. Une fois le polymère dissout, on ajoute le mélange, préalablement effectué, de l'agent désoxygénant, l'agent sacrificiel et l'agent capteur de radicaux.

### Exemple comparatif 3

Le mélange de l'agent désoxygénant, l'agent sacrificiel et l'agent capteur de radicaux est tout d'abord dissout dans la saumure. Une fois ce mélange dissout, on ajoute alors le polymère.

### Exemple 1 selon l'invention

L'agent désoxygénant est tout d'abord ajouté dans la saumure. Une fois dissout, on ajoute la composition préalablement préparée contenant le polymère, l'agent sacrificiel et l'agent capteur de radicaux

Le suivi de l'évolution de la viscosité des mélanges permet d'évaluer les séquences. Les viscosités des mélanges ainsi formulés sont mesurées à une température de 65°C, température servant aussi à évaluer la stabilité des séquences de traitement.

La viscosité est mesurée avec un appareil Brookfield et un module UL, à une vitesse de 60 tours par minute et est exprimée en centipoise (cps). Les échantillons sont placés 15 jours à 65°C sans exposition à l'oxygène de l'air.

| | Viscosité initiale (cps) | Viscosité après 15 jours à 65°C (cps) | Evolution de la viscosité (%) |
|---|---|---|---|
| Ex. comparatif 1 | 7,5 | 4,3 | - 43 % |
| Ex. comparatif 2 | 7,5 | 3,2 | - 45 % |
| Ex. comparatif 3 | 7,5 | 5,9 | - 21 % |
| Ex. 1 selon l'invention | 7,5 | 7,6 | +1 % |

La séquence selon l'invention permet de conserver une viscosité stable de la solution dans le temps. Elle sera donc plus efficace pour balayer le réservoir.

Une autre série d'essais est réalisée avec la séquence de l'exemple 1 selon l'invention, en faisant varier différents paramètres.

### Exemple 2 selon l'invention

Par rapport à l'exemple 1 selon l'invention, seul l'agent désoxygénant et sa teneur sont modifiés. On choisit la dithionite de sodium, agent très néfaste au polymère quand il est en fort excès, utilisé à 20 ppm. Il faut 10,875 ppb de dithionite de sodium pour consommer 1 ppb d'O₂ : 20 ppm correspondent donc à une désoxygénation à 14,7 fois la stoechiométrie.

### Exemple 3 selon l'invention

Par rapport à l'exemple 1 selon l'invention, seul l'agent sacrificiel et sa teneur sont modifiés. On choisit le dipropylène glycol utilisé à 100 ppm.

### Exemple 4 selon l'invention

Par rapport à l'exemple 1 selon l'invention, seul l'agent capteur de radicaux sont modifiés. On choisit le le mercaptobenzothiazole utilisé à 5 ppm.

Les résultats sont les suivants

| | Viscosité initiale (cps) | Viscosité après 15 jours à 65°C (cps) | Evolution de la viscosité (%) |
|---|---|---|---|
| Ex 2 selon l'invention | 7,5 | 7,1 | -5 % |
| Ex 3 selon l'invention | 7,5 | 7,1 | -5 % |
| Ex 4 selon l'invention | 7,5 | 6,9 | -8 % |

Ces résultats montrent bien l'intérêt de la séquence de l'invention, en prenant d'autres composés chimiques pour chaque famille.

Enfin, une troisième série d'essais prend en compte les variantes de la séquence de l'invention.

### Exemple 5 selon l'invention

Une étape supplémentaire d'oxygénation est effectuée, préalablement à l'ajout de l'agent désoxygénant, afin de réduire la concentration en sulfure d'hydrogène à 500 ppb et la concentration en Fe²⁺ à 0,3 ppm. Cette opération consiste à injecter du dioxygène sous forme gazeuse pour dégazer et précipiter des hydroxydes ferreux. A la suite de cette étape d'oxygénation, la saumure contient 3,8 ppm d'O₂ et à une température de 45°C.

La séquence de l'exemple 1 selon l'invention est ensuite reproduite dans cette saumure et l'agent désoxygénant utilisé est la dithionite de sodium à 50 ppm, ce qui correspond à 1,2 fois la stoechiométrie.

### Exemple 6 selon l'invention

Le procédé ASP est utilisé dans cet exemple. Un agent alcalin et un agent tensioactif sont ajoutés dans une saumure, après l'ajout principal de l'agent désoxygénant et après l'ajout de la composition à base de polymère. La saumure est adoucie et a la composition suivante :

| **Saumure adoucie à 5 136 mg/l** | | |
|---|---|---|
| *Pour 1 000 g* | | |
| NaCl | 4,147 | g |
| KCl | 0,035 | g |
| NaHCO₃ | 0,319 | g |
| Na₂SO₄ | 0,67 | g |

La saumure contient 160 ppb d'O₂.

L'agent alcalin est le carbonate de sodium et est utilisé à 3000 ppm pour obtenir un pH de 10. L'agent surfactant est le Petrostep® A-1, un tensioactif anionique alkyle benzène sulfonate de la société Stepan, et est utilisé à 3500 ppm. Ces agents sont désoxygénés avec du sulfite de sodium.

La séquence de l'exemple 1 selon l'invention est ensuite reproduite dans cette saumure.

Les résultats sont les suivants

| | Viscosité initiale (cps) | Viscosité après 15 jours à 80°C (cps) | Evolution de la viscosité (%) |
|---|---|---|---|
| Ex. 5 selon l'invention | 7,7 | 7,9 | + 3% |
| Ex. 6 selon l'invention | 9,3 | 9,7 | + 4 % |

Ces résultats montrent que ces variantes du procédé permettent de conserver une viscosité stable de la solution dans le temps.

## Revendications

1. Procédé de récupération assistée du pétrole dans un gisement, comprenant la préparation d'une solution aqueuse d'au moins un polymère hydrosoluble et l'introduction dans le gisement de ladite solution aqueuse, **caractérisée en ce que** ladite solution aqueuse d'au moins un polymère hydrosoluble présente une viscosité appartenant à la gamme allant de 2 à 200 cps, les mesures de viscosité étant effectuées à 20°C avec un viscosimètre Brookfield avec un module UL ou S85 et est préparée suivant les étapes successives suivantes :
- traiter une solution aqueuse par ajout d'au moins un agent désoxygénant en large excès par rapport à l'oxygène dissout dans la solution aqueuse, avec un excès stoechiométrique d'au moins une fois la stoechiométrie (100 %) jusqu'à 50 fois la stoechiométrie ;
- fournir une composition à base de polymère contenant en même temps au moins un polymère hydrosoluble, au moins un agent capteur de radicaux, et au moins un agent sacrificiel, ledit polymère hydrosoluble étant choisi parmi les polymères organiques solubles dans l'eau présentant un poids moléculaire supérieur ou égal à 1 million g/mol à base d'acrylamide copolymérisé avec l'acide acrylique, l'acide 2-acrylamido-2-méthylpropane sulfonique ou la N-vinyl pyrrolidone et étant sous la forme d'une poudre ou d'une émulsion inverse,
- puis, après l'étape de deoxygénation, dissoudre, avec la solution aqueuse traitée, la composition à base de polymère contenant en même temps le au moins un polymère hydrosoluble, le au moins un agent capteur de radicaux et le au moins un agent sacrificiel.

2. Procédé de récupération assistée du pétrole selon la revendication 1 **caractérisé en ce qu'**avant le traitement avec au moins un agent désoxygénant, la solution aqueuse contient au moins 50 ppb d'oxygène.

3. Procédé de récupération assistée du pétrole selon l'une des revendications précédentes **caractérisé en ce qu'**avant l'addition d'agent désoxygénant, la solution aqueuse est soumise à une étape d'oxydation et/ou d'épuration, de manière à réduire la teneur en H₂S et/ou Fe²⁺ notamment.

4. Procédé de récupération assistée du pétrole selon l'une des revendications précédentes **caractérisé en ce qu'**un agent alcalin et/ou une composition contenant au moins un agent tensioactif est introduit dans la solution aqueuse, avant ou après l'étape de traitement avec un agent désoxygénant, et avant, après ou parallèlement à l'étape de dissolution de la composition à base de polymère.

5. Procédé de récupération assistée du pétrole selon l'une des revendications précédentes **caractérisé en ce que** la solution aqueuse est soumise à une étape de traitement supplémentaire avec au moins un agent désoxygénant, avant ou après l'introduction de la composition à base de polymère.

6. Procédé de récupération assistée du pétrole selon la revendication 4 **caractérisé en ce que** la solution aqueuse est soumise à une étape de traitement supplémentaire avec au moins un agent désoxygénant, juste avant l'introduction de la composition aqueuse contenant le ou les polymères hydrosolubles dans le gisement.

7. Procédé de récupération assistée du pétrole selon l'une des revendications précédentes **caractérisé en ce que** la composition à base de polymère ne contient pas d'agent désoxygénant.

8. Procédé de récupération assistée du pétrole selon l'une des revendications précédentes **caractérisé en ce que** la composition à base de polymère est constituée pour au moins 30% en masse par une partie active qui comprend exclusivement le(s) polymère(s) hydrosoluble(s), l(es)'agent(s) capteur(s) de radicaux et l(es)'agent(s) sacrificiel(s) et la composition à base de polymère peut également comprendre de 0 à 70% en masse d'une partie additive qui comprend tous les autres composants éventuellement présents dans la composition et **en ce que** la partie active de la composition contient au moins 35% en masse de polymère hydrosoluble, et de préférence au moins 50% en masse.

9. Procédé de récupération assistée du pétrole selon l'une des revendications précédentes **caractérisé en ce que** l'agent capteur de radicaux est choisi parmi la N,N'-diéthylthiourée, la N,N'-diméthylthiourée, le mercaptobenzothiazole et le mercapto benzoimidazole.

10. Procédé de récupération assistée du pétrole selon l'une des revendications précédentes **caractérisé en ce que** la composition à base de polymère est constituée pour au moins 30% en masse par une partie active qui comprend exclusivement le polymère hydrosoluble, l'agent capteur de radicaux et l'agent sacrificiel et la composition à base de polymère peut également comprendre de 0 à 70% en masse d'une partie additive qui comprend tous les autres composants éventuellement présents dans la composition et **en ce que** la quantité d'agent(s) capteur (s) de radicaux représente de 0,1 à 35% en masse par rapport à la masse de la partie active de la composition à base de polymère.

11. Procédé de récupération assistée du pétrole selon l'une des revendications précédentes **caractérisé en ce que** l'agent sacrificiel est choisi parmi le glycérol, le propylène glycol, le triméthylèneglycol, l'isopropanol, le 1,2-butanediol, le 1,3-butanediol, le 1,4-butanediol, le 2,3-butanediol, le 1,2,4-butanetriol, le pentaérythritol (PET), le triméthyloléthane, le néopentylglycol, le 1,2-pentanediol, le 2,4-pentanediol, le 2,3-pentanediol, le triméthylolpropane, le 1,5-pentanediol et l'alcool polyvinylique partiellement ou totalement hydrolysé.

12. Procédé de récupération assistée du pétrole selon l'une des revendications précédentes **caractérisé en ce que** la composition à base de polymère est constituée pour au moins 30% en masse par une partie active qui comprend exclusivement le polymère hydrosoluble, l'agent capteur de radicaux et l'agent sacrificiel et la composition à base de polymère peut également comprendre de 0 à 70% en masse d'une partie additive qui comprend tous les autres composants éventuellement présents dans la composition et **en ce que** la quantité d'agent(s) sacrificiel(s) varie de 0,1 à 35% en masse par rapport à la masse de la partie active de la composition à base de polymère.

13. Procédé de récupération assistée du pétrole selon l'une des revendications précédentes **caractérisé en ce que** l'agent désoxygénant est choisi parmi les sulfites, les bisulfites éventuellement en mélange avec du borohydrure de sodium, les métabisulfites, les dithionites des métaux alcalins ou alcalino-terreux, et l'hydrazine et ses dérivés hydroxylamine.

## Patentansprüche

1. Verfahren zur unterstützten Gewinnung von Öl in einem Vorkommen, aufweisend das Herstellen einer wässrigen Lösung von mindestens einem wasserlöslichen Polymer und das Einbringen der besagten wässrigen Lösung in das Vorkommen, **dadurch gekennzeichnet, dass** die besagte wässrige Lösung von mindestens einem wasserlöslichen Polymer eine Viskosität hat, die zu dem Bereich gehört, der von 2 bis 200 cps geht, wobei die Viskositätsmessungen bei 20°C mit einem Brookfield-Viskosimeter mit einem Modul UL oder S85 durchgeführt werden, und hergestellt ist gemäß den folgenden aufeinanderfolgenden Schritten:
- Behandeln einer wässrigen Lösung mittels Zusetzens von mindestens einem Desoxygenierungsmittel in großem Überschuss mit Bezug auf den in der wässrigen Lösung gelösten Sauerstoff mit einem stöchiometrischen Überschuss von mindestens einmal der Stöchiometrie (100 %) bis zu 50 mal der Stöchiometrie,
- Bereitstellen einer Zusammensetzung auf Polymerbasis, welche gleichzeitig mindestens ein wasserlösliches Polymer, mindestens ein Radikalfänger-Mittel und mindestens ein Opfer-Mittel enthält, wobei das besagte wasserlösliche Polymer ausgewählt ist aus den organischen in Wasser löslichen Polymeren, die ein Molekulargewicht von größer oder gleich 1 Million g/mol haben, auf Basis von Acrylamid, welches copolymerisiert ist mit Akrylsäure, 2-Acrylamido-2-methylpropansulfonsäure oder N-Vinylpyrrolidon und in Form eines Pulvers oder einer inversen Emulsion ist,
- dann, nach dem Desoxygenierungsschritt, Lösen mit der behandelten wässrigen Lösung der Zusammensetzung auf Polymerbasis, welche gleichzeitig das mindestens eine wasserlösliche Polymer, das mindestens eine Radikalfänger-Mittel und das mindestens eine Opfer-Mittel enthält.

2. Verfahren zur unterstützten Gewinnung von Öl gemäß Anspruch 1, **dadurch gekennzeichnet, dass** die wässrige Lösung vor dem Behandeln mit mindestens einem Desoxygenierungsmittel mindestens 50 ppb Sauerstoff enthält.

3. Verfahren zur unterstützten Gewinnung von Öl gemäß einem der vorherigen Ansprüche, **dadurch gekennzeichnet, dass** die wässrige Lösung vor dem Hinzufügen des Desoxygenierungsmittels einem Oxidieren- und/oder Reinigen-Schritt unterzogen wird, um den H₂S- und/oder Fe²⁺-Gehalt im Speziellen zu reduzieren.

4. Verfahren zur unterstützten Gewinnung von Öl gemäß einem der vorherigen Ansprüche, **dadurch gekennzeichnet, dass** ein Alkalin-Mittel und/oder eine Zusammensetzung, die zumindest ein oberflächenaktives Mittel enthält, in die wässrige Lösung eingebracht wird vor oder nach dem Schritt des Behandelns mit einem Desoxygenierungsmittel und vor, nach oder parallel zu dem Schritt des Lösens der Zusammensetzung auf Polymerbasis.

5. Verfahren zur unterstützten Gewinnung von Öl gemäß einem der vorherigen Ansprüche, **dadurch gekennzeichnet, dass** die wässrige Lösung vor oder nach dem Einbringen der Zusammensetzung auf Polymerbasis einem Schritt des Zusatzbehandelns mit mindestens einem Desoxygenierungsmittel unterzogen wird.

6. Verfahren zur unterstützten Gewinnung von Öl gemäß Anspruch 4, **dadurch gekennzeichnet, dass** die wässrige Lösung kurz vor dem Einbringen der wässrigen Zusammensetzung, welche das oder die wasserlöslichen Polymere enthält, in das Vorkommen einem Schritt des Zusatzbehandelns mit mindestens einem Desoxygenierungsmittel unterzogen wird.

7. Verfahren zur unterstützten Gewinnung von Öl gemäß einem der vorherigen Ansprüche, **dadurch gekennzeichnet, dass** die Zusammensetzung auf Polymerbasis kein Desoxygenierungsmittel enthält.

8. Verfahren zur unterstützten Gewinnung von Öl gemäß einem der vorherigen Ansprüche, **dadurch gekennzeichnet, dass** die Zusammensetzung auf Polymerbasis zu mindestens 30% bezogen auf die Masse aus einem aktiven Teil gebildet ist, welcher ausschließlich das/die wasserlösliche(n) Polymer(e), das/die Radikalfänger-Mittel und das/die Opfer-Mittel aufweist, und die Zusammensetzung auf Polymerbasis gleichermaßen von 0 bis 70% bezogen auf die Masse von einem Additivteil aufweisen kann, der alle anderen Bestandteile aufweist, die eventuell in der Zusammensetzung vorhanden sind, und dadurch, dass der aktive Teil mindestens 35% bezogen auf die Masse wasserlösliches Polymer aufweist, und vorzugsweise mindestens 50% bezogen auf die Masse.

9. Verfahren zur unterstützten Gewinnung von Öl gemäß einem der vorherigen Ansprüche, **dadurch gekennzeichnet, dass** das Radikalfänger-Mittel ausgewählt ist aus N,N'-Diethylthioharnstoff, N,N'-Dimethylthioharnstoff, Mercaptobenzothiazol und Mercapto-Benzoimidazol.

10. Verfahren zur unterstützten Gewinnung von Öl gemäß einem der vorherigen Ansprüche, **dadurch gekennzeichnet, dass** die Zusammensetzung auf Polymerbasis zu mindestens 30% bezogen auf die Masse aus einem aktiven Teil gebildet ist, welcher ausschließlich das wasserlösliche Polymer, das Radikalfänger-Mittel und das Opfer-Mittel aufweist, und die Zusammensetzung auf Polymerbasis gleichermaßen von 0 bis 70% bezogen auf die Masse von einem Additivteil aufweisen kann, der alle anderen Bestandteile aufweist, die eventuell in der Zusammensetzung vorhanden sind, und dadurch, dass die Menge an Radikalfänger(n)-Mittel(n) von 0,1 bis 35% bezogen auf die Masse mit Bezug auf die Masse des aktiven Teils der Zusammensetzung auf Polymerbasis darstellt.

11. Verfahren zur unterstützten Gewinnung von Öl gemäß einem der vorherigen Ansprüche, **dadurch gekennzeichnet, dass** das Opfer-Mittel ausgewählt ist aus Glycerin, Propylenglykol, Trimethylenglykol, Isopropanol, 1,2-Butandiol, 1,3-Butandiol, 1,4-Butandiol, 2,3-Butandiol, 1,2,4-Butantriol, Pentaerythrit (PET), Trimethylolethan, Neopentylglykol, 1,2-Pentandiol, 2,4-Pentandiol, 2,3-Pentandiol, Trimethylolpropan, 1,5-Pentandiol und teilweise oder vollständig hydrolysiertem Polyvinylalkohol.

12. Verfahren zur unterstützten Gewinnung von Öl gemäß einem der vorherigen Ansprüche, **dadurch gekennzeichnet, dass** die Zusammensetzung auf Polymerbasis zu mindestens 30% bezogen auf die Masse aus einem aktiven Teil gebildet ist, welcher ausschließlich das wasserlösliche Polymer, das Radikalfänger-Mittel und das Opfer-Mittel aufweist, und die Zusammensetzung auf Polymerbasis gleichermaßen von 0 bis 70% bezogen auf die Masse von einem Additivteil aufweisen kann, der alle anderen Bestandteile aufweist, die eventuell in der Zusammensetzung vorhanden sind, und dadurch, dass die Menge an Opfer-Mittel(n) von 0,1 bis 35% bezogen auf die Masse mit Bezug auf die Masse des aktiven Teils der Zusammensetzung auf Polymerbasis variiert.

13. Verfahren zur unterstützten Gewinnung von Öl gemäß einem der vorherigen Ansprüche, **dadurch gekennzeichnet, dass** das Desoxygenierungsmittel ausgewählt ist aus Sulfiten, Bisulfiten, die eventuell in Mischung mit Natriumborhydrid sind, Metabisulfiten, Dithioniten von Alkali- oder Erdalkalimetallen sowie Hydrazin und seinen Hydroxylaminderivaten.

## Claims

1. Method for the enhanced recovery of oil from a deposit, comprising the preparation of an aqueous solution of at least one water-soluble polymer and the introduction of said aqueous solution into the deposit, **characterised in that** said aqueous solution of at least one water-soluble polymer has a viscosity in the range of from 2 to 200 cps, the viscosity measurements being carried out at 20°C using a Brookfield viscometer with a UL or S85 module, and is prepared by the following successive steps:
- treating an aqueous solution by addition of at least one oxygen scavenging agent in large excess relative to the oxygen dissolved in the aqueous solution, with a stoichiometric excess of from at least one times the stoichiometry (100%) to 50 times the stoichiometry;
- providing a polymer-based composition comprising at the same time at least one water-soluble polymer, at least one radical scavenging agent and at least one sacrificial agent, said water-soluble polymer being chosen from the water-soluble organic polymers having a molecular weight greater than or equal to 1 million g/mol based on acrylamide copolymerised with acrylic acid, 2-acrylamido-2-methylpropanesulfonic acid or N-vinylpyrrolidone, and being in the form of a powder or an inverse emulsion,
- then, after the oxygen scavenging step, dissolving, with the treated aqueous solution, the polymer-based composition comprising at the same time the at least one water-soluble polymer, the at least one radical scavenging agent and the at least one sacrificial agent.

2. Method for the enhanced recovery of oil according to claim 1, **characterised in that**, before the treatment with at least one oxygen scavenging agent, the aqueous solution contains at least 50 ppb oxygen.

3. Method for the enhanced recovery of oil according to any one of the preceding claims, **characterised in that**, before the addition of oxygen scavenging agent, the aqueous solution is subjected to an oxidation and/or purification step so as to reduce the content of H₂S and/or Fe²⁺ especially.

4. Method for the enhanced recovery of oil according to any one of the preceding claims, **characterised in that** an alkaline agent and/or a composition comprising at least one surface-active agent is introduced into the aqueous solution, before or after the step of treatment with an oxygen scavenging agent, and before, after or in parallel with the step of dissolving the polymer-based composition.

5. Method for the enhanced recovery of oil according to any one of the preceding claims, **characterised in that** the aqueous solution is subjected to a step of additional treatment with at least one oxygen scavenging agent, before or after the introduction of the polymer-based composition.

6. Method for the enhanced recovery of oil according to claim 4, **characterised in that** the aqueous solution is subjected to a step of additional treatment with at least one oxygen scavenging agent, just before the introduction of the aqueous composition comprising the water-soluble polymer or polymers into the deposit.

7. Method for the enhanced recovery of oil according to any one of the preceding claims, **characterised in that** the polymer-based composition does not contain oxygen scavenging agent.

8. Method for the enhanced recovery of oil according to any one of the preceding claims, **characterised in that** the polymer-based composition is composed of at least 30% by mass of an active part which comprises only the water-soluble polymer(s), the radical scavenging agent(s) and the sacrificial agent(s), and the polymer-based composition can also comprise from 0 to 70% by mass of an additive part which comprises all the other components that are optionally present in the composition, and **in that** the active part of the composition contains at least 35% by mass water-soluble polymer, and preferably at least 50% by mass.

9. Method for the enhanced recovery of oil according to any one of the preceding claims, **characterised in that** the radical scavenging agent is chosen from N,N'-diethylthiourea, N,N'-dimethylthiourea, mercaptobenzothiazole and mercaptobenzimidazole.

10. Method for the enhanced recovery of oil according to any one of the preceding claims, **characterised in that** the polymer-based composition is composed of at least 30% by mass of an active part which comprises only the water-soluble polymer, the radical scavenging agent and the sacrificial agent, and the polymer-based composition can also comprise from 0 to 70% by mass of an additive part which comprises all the other components that are optionally present in the composition, and **in that** the quantity of radical scavenging agent(s) represents from 0.1 to 35% by mass, based on the mass of the active part of the polymer-based composition.

11. Method for the enhanced recovery of oil according to any one of the preceding claims, **characterised in that** the sacrificial agent is chosen from glycerol, propylene glycol, trimethylene glycol, isopropanol, 1,2-butanediol, 1,3-butanediol, 1,4-butanediol, 2,3-butanediol, 1,2,4-butanetriol, pentaerythritol (PET), trimethylolethane, neopentyl glycol, 1,2-pentanediol, 2,4-pentanediol, 2,3-pentanediol, trimethylolpropane, 1,5-pentanediol and partially or totally hydrolysed polyvinyl alcohol.

12. Method for the enhanced recovery of oil according to any one of the preceding claims, **characterised in that** the polymer-based composition is composed of at least 30% by mass of an active part which comprises only the water-soluble polymer, the radical scavenging agent and the sacrificial agent, and the polymer-based composition can also comprise from 0 to 70% by mass of an additive part which comprises all the other components that are optionally present in the composition, and **in that** the quantity of sacrificial agent(s) varies from 0.1 to 35% by mass, based on the mass of the active part of the polymer-based composition.

13. Method for the enhanced recovery of oil according to any one of the preceding claims, **characterised in that** the oxygen scavenging agent is chosen from the sulfites, the bisulfites optionally in admixture with sodium borohydride, the metabisulfites, the dithionites of alkaline or alkaline earth metals, and hydrazine and its hydroxylamine derivatives.
